# EUROPEAN PATENT APPLICATION

(11) **EP 1 775 119 A2**
(43) Date of publication of application: **18.04.2007**
(21) Application number: 06019180.6
(22) Date of filing: 13.09.2006
(51) Int. Cl.: B32B 15/08

(54) **Pressure-sensitive adhesive label for hard disk drive, and hard disk drive using the pressure-sensitive adhesive label for hard disk drive**

(30) Priority: 20.09.2005 JP 2005271365
(71) Applicant: NITTO DENKO CORPORATION, Osaka (JP)
(72) Inventor: Nonaka, Takahiro, Ibaraki-shi Osaka (JP); Ooura, Masahiro, Ibaraki-shi Osaka (JP)
(74) Representative: Grünecker, Kinkeldey, Stockmair & Schwanhäusser Anwaltssozietät

(57) **Abstract**

The pressure-sensitive adhesive label for a hard disk drive is a pressure-sensitive adhesive label for adhering to a package outer surface of a hard disk drive, having a substrate, an information display portion forming face formed on one side of the substrate and a pressure-sensitive adhesive layer formed on other side of the substrate, and is characterized in that as the pressure-sensitive adhesive layer, the surface has a conductive pressure-sensitive adhesive layer utilized as a pressure-sensitive adhesive surface, a conductive layer is formed on the face at the substrate side in the conductive pressure-sensitive adhesive layer, and an electric resistance value in a two-dimensional direction on the surface of the conductive pressure-sensitive adhesive layer is 5 Ω or less.

## Description

### FIELD OF THE INVENTION

The present invention relates to a pressure-sensitive adhesive label for a hard disk drive, used by adhering to a package outer surface of a hard disk drive (HDD), and a hard disk drive using the pressure-sensitive adhesive label for a hard disk drive. More particularly, it relates to a pressure-sensitive adhesive label for a hard disk drive, which exhibits an information display function and further can effectively prevent charging of a hard disk drive, by adhering to a package outer surface of the hard disk drive, and a hard disk drive using the pressure-sensitive adhesive label for a hard disk drive.

### BACKGROUND OF THE INVENTION

In recent years, hard disk drives increase in its production volume with spread volume of devices having a hard disk drive incorporated therein (for example, AV equipments, that is, a so-called "MP-3 player" and the like), and are used in consumer devices. As a result, further cost reduction is required with further reduction in size and improvement in recording density. Further, a hard disk drive generally has a constitution that main parts such as a magnetic disk, a magnetic head, a driving motor and the like are incorporated in a package, and a control base is fitted to a package exterior thereof. Of those, the magnetic heat is liable to be broken down even in weak electric current.

Further, the hard disk drive has concerns that with high capacity and high read-in speed, a large increase in number of revolution of a motor proceeds, and a frictional static electricity due to rotation of a motor incurs head crush. For this reason, in the present situation, a conductive adhesive is poured between a driving motor portion and a base (a housing main body) having the driving motor portion fitted thereto, and static electricity from the motor is allowed to escape to the base side, thereby preventing head crush due to static electricity. However, a conductive adhesive is very expensive, and is required to pour by a separate step different from an adhesive for use to fix the base and the driving motor portion, resulting in increase of steps. Thus, the conductive adhesive has a large problem to cost reduction.

On the other hand, it is substantially essential to adhere a pressure-sensitive adhesive label having an information display function (a pressure-sensitive adhesive label for information display) to a hard disk drive for the purpose of information display.

As pressure-sensitive adhesive tapes or pressure-sensitive adhesive labels for information display, pressure-sensitive adhesive tapes or pressure-sensitive adhesive labels for information display, having an antistatic function imparted thereto are known (see JP-A-8-245932 and JP-A-2003-308016). (The term "JP-A" as used herein means an "unexamined published Japanese patent application".) Further, various pressure-sensitive adhesives having conductivity (conductive pressure-sensitive adhesives) are known (see JP-B-4-17993 and JP-T-4-503831). (The term "JP-B" as used herein means an "examined Japanese patent publication" and the term "JP-T" as used herein means a "published Japanese translation of a PCT patent application".)

However, the conventional pressure-adhesive adhesive tapes having an antistatic function imparted thereto (antistatic pressure-sensitive adhesive tapes) or the conventional pressure-sensitive adhesive labels for information display, having an antistatic function imparted thereto (antistatic pressure-sensitive adhesive labels for information display) have the object of antistatic properties of the antistatic pressure-sensitive adhesive tapes and the antistatic pressure-sensitive adhesive labels for information display, themselves, and do not have the antistatic properties for an adherent itself to which the antistatic pressure-sensitive adhesive tapes or the antistatic pressure-sensitive adhesive labels for information display are adhered. For this reason, even where the conventional antistatic pressure-sensitive adhesive tapes or antistatic pressure-sensitive adhesive labels for information display are adhered to an adherent, charging of the adherent itself cannot be prevented.

Further, even where the conventional conductive pressure-sensitive adhesives are simply applied to pressure-sensitive adhesive tapes or pressure-sensitive adhesive labels for information display, charging of an adherent itself cannot effectively be prevented.

Thus, pressure-sensitive adhesive labels for information display, capable of effectively preventing charging of an adherent itself by adhering to the adherent while exhibiting an information display function are not conventionally disclosed. That is, pressure-sensitive adhesive labels for information display for the purpose of preventing charging of a hard disk drive are not conventionally disclosed.

### SUMMARY OF THE INVENTION

Accordingly, objects of the present invention are to provide a pressure-sensitive adhesive label for a hard disk capable of exhibiting information display function and further effectively preventing charging of the hard disk drive, by adhering to a package outer surface of the hard disk drive, and a hard disk drive using the pressure-sensitive adhesive label for a hard disk drive.

Other objects of the present invention are to provide a pressure-sensitive adhesive label for a hard disk capable of establishing cost reduction of a hard disk drive, and a hard disk drive using the pressure-sensitive adhesive label for a hard disk drive.

As a result of keen investigations to solve the above problems, the present inventors have found that when a pressure-sensitive adhesive label having a specific layer constitution and further having specific properties is used as a pressure-sensitive adhesive label for a hard disk drive, and is adhered to a package outer surface of the hard disk drive, information display function is exhibited and concurrently, charging of the hard disk drive can effectively be prevented. The present invention has been completed based on those findings.

That is, the present invention is a pressure-sensitive adhesive label for a hard disk drive, which is a pressure-sensitive adhesive label for adhering to a package outer surface of a hard disk drive, having a substrate, an information display portion forming face formed on one side of the substrate and a pressure-sensitive adhesive layer formed on other side of the substrate, and is characterized in that as the pressure-sensitive adhesive layer, the surface has a conductive pressure-sensitive adhesive layer utilized as a pressure-sensitive adhesive face, a conductive layer is formed on a face at the substrate side in the conductive pressure-sensitive adhesive layer, and an electric resistance value in a two-dimensional direction on the surface of the conductive pressure-sensitive adhesive layer is 5 Ω or less.

In the present invention, it is preferable that the conductive layer is a metal foil layer or a metal deposition layer. Further, it is preferable that the conductive pressure-sensitive adhesive layer is formed by a pressure-sensitive adhesive composition containing a metal filler. Moreover, it is preferable that the substrate is formed by a polyester film and the substrate may show a white color.

As the pressure-sensitive adhesive label for a hard disk drive of the present invention, it is preferable that the conductive pressure-sensitive adhesive layer is protected by a release liner that does not use a silicone release agent.

Such a pressure-sensitive adhesive label for a hard disk drive can suitably be used as a pressure-sensitive adhesive label for adhering to an package outer surface of a hard disk drive containing at least a part of an outer surface of a driving motor portion and at least a part of an outer surface of a base having the driving motor portion fitted thereto.

The present invention is further a hard disk drive which is a hard disk drive having a pressure-sensitive adhesive label adhered to a package outer surface thereof, and is characterized in that the above-described pressure-sensitive adhesive label for a hard disk drive is used as the pressure-sensitive adhesive label. It is preferable that in the hard disk drive, the pressure-sensitive adhesive label for a hard disk drive is adhered to an package outer surface of a hard disk drive containing at least a part of an outer surface of a driving motor portion and at least a part of an outer surface of a base having the driving motor portion fitted thereto.

### BRIEF DESCRIPTION OF THE DRAWINGS

Fig. 1 is a schematic sectional view showing one example of the HDD pressure-sensitive adhesive label of the present invention.
Fig. 2 is a schematic view showing a method of adhering the HDD pressure-sensitive adhesive label when measuring the electric resistance value in a two-dimensional direction on the surface of the conductive pressure-sensitive adhesive layer.
Fig. 3 is a schematic view showing one example of the hard disk drive of the present invention.

### Description of Reference Numerals and Signs

- 1: Pressure-sensitive adhesive label for a hard disk drive (HDD pressure-sensitive adhesive label)
- 2: Substrate
- 3: Information display portion forming face
- 4: Conductive pressure-sensitive adhesive layer
- 5: Conductive layer
- 6: Release liner
- 7: HDD pressure-sensitive adhesive label
- 8a: Aluminum plate
- 8b: Aluminum plate
- 9a: Each probe of an electric resistance value measurement device
- 9b: Each probe of an electric resistance value measurement device
- 10a: Position to which a tip of the probe 9a of an electric resistance value measurement device is fitted
- 10b: Position to which a tip of the probe 9b of an electric resistance value measurement device is fitted
- 11.: HDD pressure-sensitive adhesive label
- 12.: Package of a hard disk drive
- 12a: Base
- 12b: Driving motor portion

### DETAILED DESCRIPTION OF THE INVENTION

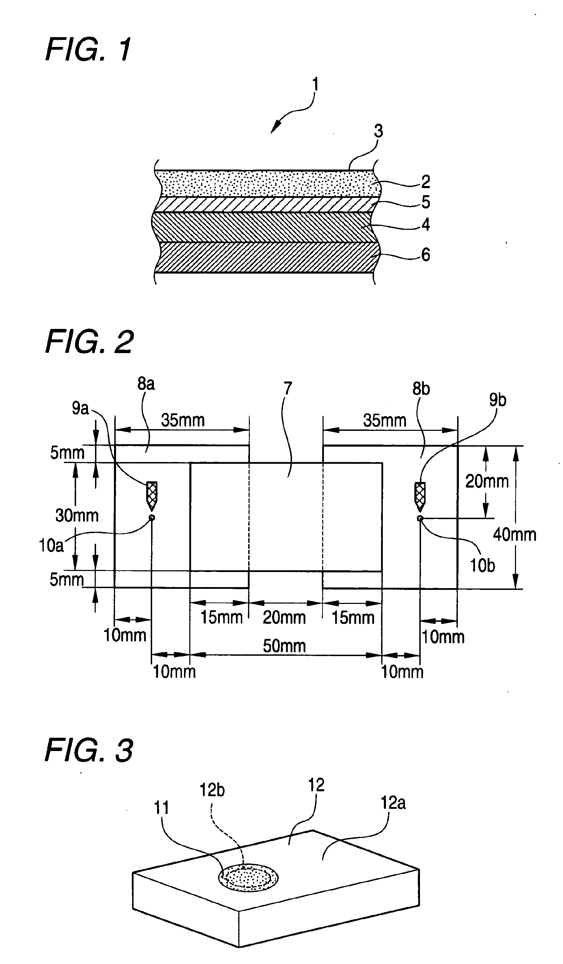

The present invention is described below based on the drawings. The pressure-sensitive adhesive label for a hard disk drive (sometimes referred to as an "HDD pressure-sensitive adhesive label") of the present invention is a pressure-sensitive adhesive label for adhering to an outer surface of a package outer surface of a hard disk drive, and has a substrate, an information display portion forming face formed on one side (one surface) of the substrate and a pressure-sensitive adhesive layer formed on other side (other surface) of the substrate, as shown in Fig. 1. Further, as the pressure-sensitive adhesive layer, the surface has a conductive pressure-sensitive adhesive layer (a pressure-sensitive adhesive layer having conductivity) utilized as a pressure-sensitive adhesive surface, it has a constitution that a conductive layer is formed on the face at the substrate side in the conductive pressure-sensitive adhesive layer, and it has the characteristic that an electric resistance value in a two-dimensional direction (a direction parallel to a plane) on the surface of the conductive pressure-sensitive adhesive layer is 5 Ω or less. The conductivity becomes high as the electric resistance value decreases.

Fig. 1 is a schematic sectional view showing one example of the HDD pressure-sensitive adhesive label of the present invention. In Fig. 1, 1 is a pressure-sensitive adhesive label for a hard disk drive (an HDD pressure-sensitive adhesive label), 2 is a substrate, 3 is an information display portion forming face, 4 is a conductive pressure-sensitive adhesive layer, 5 is a conductive layer, and 6 is a release liner. The HDD pressure-sensitive adhesive label 1 shown in Fig. 1 has a constitution that the information display portion forming face 3 is formed on one side (back surface) of the substrate 2, and the conductive pressure-sensitive adhesive layer 4 is formed on other side of the substrate through the conductive layer 5, and further has the characteristic that an electric resistance value in a two-dimensional direction on the surface of the conductive pressure-sensitive adhesive layer 4 utilized as a pressure-sensitive adhesive face is 5 Ω or less. The surface (a pressure-sensitive adhesive face) of the conductive pressure-sensitive adhesive layer 4 is protected by the release liner 6, and the release liner 6 is peeled when using the HDD pressure-sensitive adhesive label 1 (that is, the conductive pressure-sensitive adhesive layer 4 is protected by the release liner 6 until using the HDD pressure-sensitive adhesive label 1).

Because the HDD pressure-sensitive adhesive label of the present invention has the above-described constitution and characteristic, by adhering to a package outer surface of a hard disk drive utilizing the conductive pressure-sensitive adhesive layer, it is possible to make the hard disk drive indicate information, and it is further possible to prevent charging of the hard disk drive itself. That is, the conventional pressure-sensitive adhesive labels could have exhibited only the function to make a hard disk drive indicate information, but the HDD pressure-sensitive adhesive label of the present invention can concurrently exhibit the function to make a hard disk drive indicate information and the function to prevent charging of the hard disk drive itself. Further, by using the HDD pressure-sensitive adhesive label of the present invention, the constitution conventionally achieved by two members of a conductive adhesive and a pressure-sensitive adhesive label can be achieved by the same member (a single member).

In the present invention, an "electric resistance value in a two-dimensional direction on the surface of the conductive pressure-sensitive adhesive layer" is an electric resistance value (Ω) measured by the following measurement method.

### (Measurement method of electric resistance value in two-dimensional direction)

An HDD pressure-sensitive adhesive label is cut into a size of a width: 30 mm and a length: 50 mm. Two aluminum plates (width: 40 mm, length: 35 mm, thickness: 2.5 mm) are provided as adherents. The HDD pressure-sensitive adhesive label is adhered to each aluminum plate in a length of 15 mm from one edge parallel to the width direction in a state of bridging two aluminum plates (distance between aluminum plates: 20 mm) as shown in Fig. 2 under the atmosphere of temperature: 25°C and humidity: 65%RH. A load of 5 kg or more is applied using a hand roller to sufficiently contact bond, thereby adhering. Immediately after contact bonding, a tip of each probe of an electric resistance measurement device (name of instrument: HIOKI m-ohm HiTESTER 3540, a product of Hioki E.E. Corporation) is fitted to a central position in a width direction on each aluminum plate (a position of 20 mm from each edge parallel to a lengthwise direction) and to a position which is a position of 10 mm from an edge parallel to a width direction at the side on which the HDD pressure-sensitive adhesive label is not adhered (a distance between electrodes: 70 mm). After allowing the state to stand for 10 seconds, an electric resistance value (Ω) is read off.

Setting of the electric resistance measurement device (instrument: HIOKI m-ohm HiTESTER 3540, a product of Hioki E.E. Corporation) at the measurement is an automatic setting. In this automatic setting, applied voltage and measurement current have the setting by the relationship or condition as shown in Table 1, and it is possible to automatically change the measurement current and applied voltage depending on an electric resistance value of a product to be measured (in this case, two aluminum plates bridged by the HDD pressure-sensitive adhesive label).

**Table 1**

| | | | | | | | |
|---|---|---|---|---|---|---|---|
| Measurement range | 30 (mΩ) | 300 (mΩ) | 3 (Q) | 30 (Ω) | 300 (Ω) | 3 (kΩ) | 30 (kΩ) |
| Measurement current | 100 (mA) | | 1 (mmA) | | | 10 (µA) | |
| Maximum applied voltage | 3.5 (mV) | 35 (mV) | 3.5 (mV) | 35 (mV) | 350 (mV) | 35 (mV) | 350 (mV) |

In the HDD pressure-sensitive adhesive label of the present invention, the electric resistance value in a two-dimensional direction on the surface of the conductive pressure-sensitive adhesive layer is not particularly limited so long as it is 5 Ω or less, but the lower value the preferable. Specifically, in the HDD pressure-sensitive adhesive label, it is preferable that the electric resistance value in a two-dimensional direction on the surface of the conductive pressure-sensitive adhesive layer is 3 Ω or lower (particularly 1 Ω or lower, and above all, 0.5 Ω or lower). Where the electric resistance value in a two-dimensional direction on the surface of the conductive pressure-sensitive adhesive layer exceeds 5 Ω, charging of the hard disk drive cannot be prevented, and for example, there is the possibility to induce head crush of the hard disk drive.

Fig. 2 is a schematic view showing a method of adhering the HDD pressure-sensitive adhesive label when measuring the electric resistance value in a two-dimensional direction on the surface of the conductive pressure-sensitive adhesive layer. In Fig. 2, 7 is an HDD pressure-sensitive adhesive label, 8a and 8 b are an aluminum plate, respectively, 9a and 9b are a probe of an electric resistance measurement device, respectively, 10a is a position to which a tip of the probe 9a of the electric resistance measurement device is fitted, and 10b is a position to which a tip of the probe 9b of the electric resistance measurement device is fitted. The HDD pressure-sensitive adhesive label 7 has a size of width: 30 mm and length: 50 mm. Aluminum plates (8a and 8b) each have a size of width: 40 mm and length: 35 mm (thickness: 2.5 mm). The HDD pressure-sensitive adhesive label is adhered on the aluminum plates (8a and 8b) at one edge side of 40 mm width, respectively, with a width of 30 mm and a length of 15 mm in a state of locating at the center of the 40 mm width of the aluminum plates (8a and 8b). Therefore, the aluminum plates (8a and 8b) have the state that those are bridged by the HDD pressure-sensitive adhesive label 7, and the distance between the aluminum plates (8a and 8b) is 20 mm.

When the electric resistance value is measured, a tip of each probe (9a and 9b) of the electric resistance measurement device is fitted to the position 10a and the position 10b, respectively, and the measurement is conducted. Specifically, the positions (10a and 10b) are a central position in the width direction on each of the aluminum plate (8a and 8b) (that is, a position of 20 mm from each edge parallel to a lengthwise direction), and further a position which is a position of 10 mm from the edge parallel to the width direction at the side to which the HDD pressure-sensitive adhesive label is not adhered.

### [Substrate]

The substrate in the HDD pressure-sensitive adhesive label is not particularly limited so long as it is possible to form an information display portion by various methods. The substrate may be either of plastic substrates and non-plastic substrates, and further may be composite materials of the plastic substrates and the non-plastic substrates. As the plastic substrates, polyester films or sheets such as a polyethylene terephthalate film or sheet, a polybutylene terephthalate film or sheet, a polyethylene naphthalate film or sheet, and a polybutylene naphthalate film or sheet; polyimide films or sheets; polyolefin films or sheets such as a polyethylene film or sheet, a polypropylene film or sheet, and an ethylene-propylene copolymer film or sheet; polystyrene films or sheets; polyamide films or sheets; polyvinyl chloride films or sheets; polyvinylidene chloride films or sheets; polyvinyl acetate films or sheets; polycarbonate films or sheets; polyacrylate films or sheets; polyphenylene sulfide films or sheets; polyether ether ketone films or sheets; and the like are exemplified. Plastic materials constituting the plastic substrate may be used alone or as combinations of two or more thereof. On the other hand, as the non-plastic substrates, metal substrates (for example, an aluminum foil, a copper foil, a silver foil and a gold foil), paper substrates, fabric substrates, fiber substrates and the like are exemplified. Non-plastic materials constituting the non-plastic substrate may be used alone or as combinations of two or more thereof.

As the substrate, the plastic substrates are suitably used from the standpoints of durability, ease of use and the like. Of those, the polyester films or sheets (particularly, a polyethylene terephthalate film or sheet) are suitable from the standpoints of costs, strength, durability, stability and the like.

As the substrate, it is preferable to show a white color from the standpoints of viewability or visibility of an information display portion formed on an information display portion forming face, readability of bar codes or the like, and the like. When the substrate shows a white color, whiteness of the substrate is not particularly limited, but it is preferable to be 85% or more, and it is particularly suitable to be 90% or more (above all, 95% or more). The whiteness as used herein is measured in accordance with JIS L1015.

To make the substrate show a white color, a method of kneading a white series coloring agent in materials constituting the substrate, a method of forming a white layer on the surface of the substrate, and the like can be employed. When the white layer is formed on the surface of the substrate, the white layer is generally formed on the surface at the information display portion forming face side in the substrate. However, when the substrate is a substrate having high transparency (for example, a transparent polyethylene terephthalate film or sheet), the while layer may be formed on the surface at the side opposite the information display portion forming face in the substrate. Specifically, as the substrate showing a white color, a substrate formed by a plastic material showing a white color (for example, white polyester films or sheets such as a white polyethylene terephthalate film or sheet), a substrate formed by a composition containing a white series coloring agent (for example, white series pigments such as titanium oxide), a substrate having a white layer (white printed layer) formed by a white ink composition containing a white series coloring agent on the surface thereof, and the like are exemplified.

According to need, the substrate may contain additives such as an antioxidant, an antiaging agent, an ultraviolet absorber, a plasticizer, a softener, a coloring agent, a filler and an antistatic agent.

The substrate may have a form of a single layer or may have a laminated form. The surface of the substrate may be subjected to the known and conventional surface treatments (for example, a corona treatment, a chromic acid treatment, an ozone exposure, a flame exposure, a high pressure electric shock exposure, an ionizing radiation treatment and an undercoat treatment).

The thickness of the substrate is not particularly limited, but for example, it is preferable to be 10 µm or more (for example, from 10 to 150 µm), and more preferably to be from 12 to 100 µm, from the standpoint of holding good rigidity.

### [Information display portion forming face and information display portion]

The HDD pressure-sensitive adhesive label is that the surface (back surface) of the substrate is an information display portion forming face, and an information display portion is formed on the information display portion forming face. In the HDD pressure-sensitive adhesive label of the present invention, the information display portion formed on the information display portion forming face may previously be formed, but it is possible to form when being necessary. As the information displayed on such an information display portion, for example, "Cautions on use", "Connection method", "Recognition and identification of product names, manufacturers and the like", and the like are exemplified. The information display portion can be formed by utilizing the conventional printing means and the like.

The information display portion forming face may be formed on one side of the substrate in its entire surface or its partial surface. That is, the information display portion forming face may be formed at least partially on one side of the substrate. Further, the information display portion formed on the information display portion forming face may be formed on the information display portion forming face in its entire surface or its partial surface. That is, the information display portion may be formed at least partially on the information display portion forming face.

### [Pressure-sensitive adhesive layer]

In the HDD pressure-sensitive adhesive label of the present invention, the pressure-sensitive adhesive layer is formed on a face opposite the information display portion forming face of the substrate, and as the pressure-sensitive adhesive layer, the surface has at least the conductive pressure-sensitive adhesive layer (a pressure-sensitive adhesive layer having conductivity) utilized as the pressure-sensitive adhesive face. Therefore, the HDD pressure-sensitive adhesive label may have other pressure-sensitive adhesive layer which is not utilized as the pressure-sensitive adhesive face (sometimes simply referred to as "other pressure-sensitive adhesive layer"), according to need. The other pressure-sensitive adhesive layer may be a conductive pressure-sensitive adhesive layer or a non-conductive pressure-sensitive adhesive layer.

### [Pressure-sensitive adhesive]

The conductive pressure-sensitive adhesive layer can be formed by a pressure-sensitive adhesive composition containing a conductive material (a conductive pressure-sensitive adhesive composition). Further, the non-conductive pressure-sensitive adhesive layer can be formed by a pressure-sensitive adhesive composition that does not contain a conductive material (a non-conductive pressure-sensitive adhesive composition). The pressure-sensitive adhesive used in the conductive pressure-sensitive adhesive composition or the non-conductive pressure-sensitive adhesive composition is not particularly limited, and can appropriately be selected from the conventional pressure-sensitive adhesives. Specifically, as the pressure-sensitive adhesive, acrylic pressure-sensitive adhesives, rubber series pressure-sensitive adhesives (such as a natural rubber series pressure-sensitive adhesive and a synthetic rubber series pressure-sensitive adhesive), polyester series pressure-sensitive adhesives, polyurethane series pressure-sensitive adhesives, polyamide series pressure-sensitive adhesives, epoxy series pressure-sensitive adhesives, vinyl alkyl ether series pressure-sensitive adhesives, silicone series pressure-sensitive adhesives, fluorine series pressure-sensitive adhesives, and the like exemplified. Further, the pressure-sensitive adhesive may be a hot melt type pressure-sensitive adhesive. The pressure-sensitive adhesive may be a pressure-sensitive adhesive in any form of emulsion series, solvent series, oligomer series, solid series and the like. The pressure-sensitive adhesive can be used alone or as combinations of two or more thereof.

As the pressure-sensitive adhesive, an acrylic pressure-sensitive adhesive can suitably be used from the point that it is possible to reduce the content of ionic impurities, and the points of ease of pressure-sensitive adhesive design, durability and the like. The acrylic pressure-sensitive adhesive can appropriately be selected from the conventional acrylic pressure-sensitive adhesives, and used. The acrylic pressure-sensitive adhesive constituted of a polymer (a base polymer) comprising, as a main component, a (meth)acrylic acid alkyl ester (an acrylic acid alkyl ester and a methacrylic acid alkyl ester) having an alkyl group of from 4 to 14 carbon atoms can suitably be used. As the (meth)acrylic acid alkyl ester having an alkyl group of from 4 to 14 carbon atoms, (meth)acrylic acid alkyl esters having an alkyl group of from 4 to 14 carbon atoms such as a butyl group, an isobutyl group, an s-butyl group, a t-butyl group, a pentyl group, an isopentyl group, a hexyl group, a heptyl group, a 2-ethylhexyl group, an octyl group, an isooctyl group, a nonyl group, an isononyl group, a decyl group, an isodecyl group, an undecyl group, a lauryl group, a myristyl group and an isomyristyl group are exemplified. Those (meth)acrylic acid alkyl esters can be used alone or as combinations of two or more thereof. The alkyl group of from 4 to 14 carbon atoms is of course an alkyl group in an alkoxycarbonyl group of the (meth)acrylic acid alkyl ester.

In the acrylic pressure-sensitive adhesive, a monomer component (copolymerizable monomer) copolymerizable with the (meth)acrylic acid alkyl ester may be used together with the (meth)acrylic acid alkyl ester. Such a copolymerizable monomer is not particularly limited so long as it is a monomer component copolymerizable with the (meth)acrylic acid alkyl ester. For example, carboxyl group-containing monomers such as acrylic acid, methacrylic acid, itaconic acid, maleic acid, fumaric acid and crotonic acid; acid anhydride group-containing monomers such as maleic anhydride and itaconic anhydride; hydroxyl group-containing monomers such as 2-hydroxyethyl (meth)acrylate, 2-hydroxypropyl (meth)acrylate, 3-hydroxypropyl (meth)acrylate and 4-hydroxybutyl (meth)acrylate; epoxy group-containing acrylic monomers such as glycidyl (meth)acrylate; cyano group-containing acrylic monomers such as acrylonitrile and methacrylonitrile; (N-substituted)amide monomers such as (meth)acrylamide, N,N-dimethyl (meth)acrylamide, N,N-diethyl (meth)acrylamide, n-isopropyl (meth)acrylamide, N-butyl (meth)acrylamide, N-methylol (meth)acrylamide, and N-methylolpropane (meth)acrylamide; aminoalkyl (meth)acrylate monomers such as aminoethyl (meth)acrylate, N,N-dimethylaminoethyl (meth)acrylate, and t-butylaminoethyl (meth)acrylate; vinyl esters such as vinyl acetate and vinyl propionate; styrenic monomers such as styrene; olefin series monomers such as isoprene, butadiene and isobutylene; vinyl ether series monomers such as methyl vinyl ether and ethyl vinyl ether; chlorine atom-containing monomers such as vinyl chloride and vinylidene chloride; and the like are exemplified. Those copolymerizable monomers may be used alone or as combinations of two or more thereof.

The pressure-sensitive adhesive such as an acrylic pressure-sensitive adhesive may contain appropriate additives such as a crosslinking agent, a tackifier, a softener, an antiaging agent, a pigment, a dye, a filler and a plasticizer, in addition to the polymer component such as a pressure-sensitive adhesive component (a base polymer), depending on the kind and the like of the pressure-sensitive adhesive.

### [Conductive material]

The conductive material used in the conductive pressure-sensitive adhesive composition is not particularly limited, and for example, can appropriately be selected from the conventional conductive fillers and used. As such a conductive filler, metal series conductive materials (metal fillers), carbon series conductive materials, resin series conductive materials and the like are exemplified. The conductive filler may have any form so long as it has a solid form such as a powder form, a fiber form and a particle form. The conductive material such as a conductive filler can be used alone or as combinations of two or more thereof.

The metal series conductive material may be constituted of a metal material composed of only a metallic element such as metallic element single substance or alloy, and may be constituted of various metal series compounds containing a non-metallic element together with the metallic element. Specifically, as the metallic element in the metal material comprising a metallic element single substance, group 1 elements of the periodic table, such as lithium, sodium, potassium, rubidium and cesium; group 2 elements of the periodic table, such as magnesium, calcium, strontium and barium; group 3 elements of the periodic table, such as scandium, yttrium, lanthanoid elements (lanthanum, cerium and the like), and actinoid elements (actinium and the like); group 4 elements of the periodic table, such as titanium, zirconium and hafnium; group 5 elements of the periodic table, such as vanadium, niobium and tantalum; group 6 elements of the periodic table, such as chromium, molybdenum and tungsten; group 7 elements of the periodic table, such as manganese, technetium and rhenium; group 8 elements of the periodic table, such as iron, ruthenium and osmium; group 9 elements of the periodic table, such as cobalt, rhodium and iridium; group 10 elements of the periodic table, such as nickel, palladium and platinum; group 11 elements of the periodic table, such as copper, silver and gold; group 12 elements of the periodic table, such as zinc, cadmium and mercury; group 13 elements of the periodic table, such as aluminum, gallium, indium and thallium; group 14 elements of the periodic table, such as tin and lead; group 15 elements of the periodic table, such as antimony and bismuth; and the like are exemplified. On the other hand, as the alloy, a stainless steel, a copper-nickel alloy, a brass, a nickel-chromium alloy, an iron-nickel alloy, a zinc-nickel alloy, a gold-copper alloy, a tin-lead alloy, a silver-tin-lead alloy, a nickel-chromium-iron alloy, a copper-manganese-nickel alloy, a nickel-manganese-iron alloy, a solder alloy and the like are exemplified. As the metal material composed of only a metallic element such as a metallic element single substance or an alloy, copper, gold, silver, nickel, aluminum, iron, chromium, titanium, cobalt, molybdenum, platinum, tungsten, tantalum, niobium, palladium, a stainless steel and a solder alloy are suitable.

Various metal series compounds containing a non-metallic element together with a metallic element are not particularly limited so long as those are a metal series compound containing the above-exemplified metallic element or alloy, that can exhibit conductivity. For example, metal oxides such as zinc oxide, indium oxide, titanium oxide, iron oxide, tin oxide and cadmium tin oxide; metal sulfates such copper sulfate; metal complex oxides; and the like are exemplified. The carbon series conductive material is constituted of a conductive carbon material. As the conductive carbon material, acetylene black, ketjen black, natural graphite, artificial graphite and the like are exemplified.

The resin series conductive material is constituted of a conductive polymer. As the conductive polymer, a polypyrrole series conductive polymer, a polyaniline series conductive polymer, a polyacetylene series conductive polymer, a polythiophene series conductive polymer, a polyphenylene vinylene series conductive polymer, a polyacene series conductive polymer and the like are exemplified.

Further, the conductive material may be particles or fibers, covered with a material (a metal material, a metal series compound, a conductive carbon material, a conductive polymer and the like) constituting the conductive material such as a metal series conductive material, a carbon series conductive material and a resin series conductive material.

As the conductive material, from the standpoint of conductivity, the metal series conductive material and the carbon series conductive material are preferable, and the metal series conductive material is more preferable. In particular, the metal series conductive material constituted of a metal material composed of only a metallic element, such as a metallic element single substance or an alloy, can suitably be used. That is, it is suitable that the conductive pressure-sensitive adhesive layer is formed by the pressure-sensitive adhesive composition containing the metal series conductive material (a metal filler), and in particular, it is preferable that the layer is formed by the pressure-sensitive adhesive composition containing the metal series conductive material constituted of the metal material composed of only the metallic element, such as a metallic element single substance or an alloy.

The amount of the conductive material used is not particularly limited, and can appropriately be determined according to the desired conductivity, and the like. For example, the amount is from 1 to 40 parts by weight (preferably from 3 to 35 parts by weight, and more preferably from 5 to 35 parts by weight) per 100 parts by weight of the base polymer of the pressure-sensitive adhesive. Where the proportion of the conductive material is less than 1 part by weight per 100 parts by weight of the base polymer of the pressure-sensitive adhesive, conductivity of the HDD pressure-sensitive adhesive label decreases, and on the other hand, where more than 40 parts by weight, the pressure-sensitive adhesion by the conductive pressure-sensitive adhesive layer decreases.

The pressure-sensitive adhesive layers (conductive pressure-sensitive adhesive layer, and other pressure-sensitive adhesive layer) can be formed utilizing the conventional formation method of the pressure-sensitive adhesive layer. For example, the conductive pressure-sensitive adhesive layer can be formed by a method of applying a mixture containing a pressure-sensitive adhesive, a conductive material, and if necessary, a solvent and other additives to a given face (a coating method), a method of applying the above-described mixture to an appropriate separator (a release paper or the like) to form a conductive pressure-sensitive adhesive layer, and transferring (moving and adhering) the layer to a given face (a transfer method), or the like.

The conductive pressure-sensitive adhesive layer may have any form of a single layer form and a multilayer form. Further, in the case of having other pressure-sensitive adhesive layer, the other pressure-sensitive adhesive layer may have any form of a single layer form and a multilayer form.

The thickness of the conductive pressure-sensitive adhesive layer is not particularly limited, but is 10 µm or more (preferably from 15 to 100 µm) from the standpoint of exhibiting the pressure-sensitive adhesive performance. Where the thickness of the conductive pressure-sensitive adhesive layer is less than 10 µm, there is the case that the pressure-sensitive adhesive performance can not sufficiently be exhibited. Where the thickness of the conductive pressure-sensitive adhesive layer exceeds 100 µm, there is the case that the conductive performance deteriorates. Further, in the case of having other pressure-sensitive adhesive layer, it is desirable that the thickness of the other pressure-sensitive adhesive layer is 10 µm or more (preferably from 15 to 100 µm) from the standpoint of exhibiting the pressure-sensitive adhesive performance, similar to the thickness of the conductive pressure-sensitive adhesive layer.

### [Conductive layer]

In the HDD pressure-sensitive adhesive label of the present invention, the conductive layer is formed on the face at the substrate side in the conductive pressure-sensitive adhesive layer having the surface utilized as the pressure-sensitive adhesive face. The conductive layer is not particularly limited, but a metal foil layer, a metal deposition layer, a conductive material layer and the like are exemplified. In the present invention, a metal foil layer and a metal deposition layer are suitable as the conductive layer from the standpoint of conductivity and the like.

The metal foil layer and the metal deposition layer are formed by a metal material composed of only a metallic element such as a metallic element single substance and an alloy. The metallic element (a metallic element single substance, an alloy and the like) in the metal material for forming the metal foil layer and the metal deposition layer can appropriately be selected from the materials exemplified as the metallic elements (a metallic element single substance, an alloy and the like) relating to the metal series conductive material in the item of the above-described conductive pressure-sensitive adhesive layer, and used. As the metal material forming the metal foil layer and the metal deposition layer, copper, gold, silver, nickel, aluminum, iron, chromium, titanium, cobalt, molybdenum, platinum, tungsten, tantalum, niobium, palladium, a stainless steel and a solder alloy can suitably be used, and aluminum is particularly suitable. Therefore, as the metal foil layer, an aluminum foil layer is suitable.

The conductive material layer is formed by a conductive material. The conductive material generally has the form that a conductive filler is dispersed in a binder component. The conductive filler contained in the conductive material can appropriately be selected from conductive fillers (a metal series conductive material, a carbon series conductive material, a resin series conductive material and the like) exemplified in the item of the above-described conductive pressure-sensitive adhesive layer, and used. Further, the binder component is not particularly limited, and can appropriately be selected from the conventional binder components, and used.

The formation method of the conductive layer is not particularly limited, and can appropriately be selected from the conventional methods, depending of the kind of the conductive layer, and the like. For example, where the conductive layer is a metal foil layer, the metal foil layer can be formed by laminating a metal foil on a given face utilizing a lamination method using an adhesive or a pressure-sensitive adhesive. Further, for example, where the conductive layer is a metal deposition layer, the metal deposition layer can be formed by depositing a metal material on a give face with a deposition method. Moreover, where the conductive layer is a conductive material layer, the conductive material layer can be formed by applying a conductive material to a given face. The adhesive or pressure-sensitive adhesive used in laminating the metal foil on a given face may not have conductivity, but it is preferable to have conductivity from the standpoint of increasing the conductivity of the HDD pressure-sensitive adhesive label. That is, an adhesive having conductivity or a pressure-sensitive adhesive having conductivity can suitably be used as the adhesive or pressure-sensitive adhesive used in laminating the metal foil on a given face.

The conductive layer may be formed in the form of being provided in the conductive pressure-sensitive adhesive layer. Therefore, the HDD pressure-sensitive adhesive label may have a constitution that the conductive pressure-sensitive adhesive layer having the conductive layer in the inside thereof [conductive pressure-sensitive adhesive layer having a layer constitution of conductive pressure-sensitive adhesive layer/conductive layer (metal foil layer and the like)/conductive pressure-sensitive adhesive layer] is formed on a substrate.

The conductive layer may have a form of a single layer, or may have a form of a multilayer.

The thickness of the conductive layer is not particularly limited, and can appropriately be set according to the kind of the conductive layer, the kind of the conductive component (a metal material, a conductive filler and the like) in the conductive layer, and the like. The thickness of the conductive layer can be selected form a range of, for example, from 100 nm (0.1 µm) to 100 µm (preferably from 0.1 to 50 µm, and more preferably from 1 to 35 µm).

### [Release liner]

In the HDD pressure-sensitive adhesive label of the present invention, a release liner for protecting the surface of the conductive pressure-sensitive adhesive layer utilized as the pressure-sensitive adhesive face until use may be used. As the release liner, the known and conventional release papers and the like can be used. Specifically, as the release liner, release liners by plastic films themselves having high releasability for example, polyolefin series films by a polyolefin series resin comprising a polyethylene (a low density polyethylene and a linear low density polyethylene), polypropylene, an ethylene-α-olefin copolymer (a block copolymer or a random copolymer) such as an ethylene-propylene copolymer, or a mixture of those; and Teflon (registered trade mark)-made films]; release liners having a constitution that a release layer by a material of the above-described plastic film having high releasability is formed in one side of various supports (substrates); and the like are exemplified. As the various supports, plastic films such as a polyethylene terephthalate film, a polyimide film, a polypropylene film, a polyethylene film and a polycarbonate film; metal-deposited plastic films; papers such as Japanese paper, a foreign paper and a glassine paper; substrates by a fibrous material such as a non-woven fabric and a fabric; metal foils; and the like are exemplified. Further, the release layer formed on one side of the support can be formed by laminating or coating a polyolefin series films by a polyolefin series resin such as a polyethylene, a polypropylene and an ethylene-α-olefin copolymer (such as an ethylene-propylene copolymer); Teflon (registered trade mark)-made films; and the like on the support.

As the release liner, a liner in which a release treating agent layer comprising a release treating agent is formed on the surface of a substrate for a release liner can be used. The release treating agent is not particularly limited, and, for example, release agents such as fluorine series polymers (fluorine series releasing agents), long chain alkyl group-containing polymers (long chain alkyl series releasing agents) and silicone polymers (silicone series releasing agents) are exemplified. Further, as the substrate for a release liner, plastic films such as a polyethylene terephthalate film, a polyimide film, a polypropylene film, a polyethylene film and a polycarbonate film; metal-deposited plastic films; papers such as Japanese paper, a foreign paper and a glassine paper; substrates by a fibrous material such as a non-woven fabric and a fabric; metal foils; and the like are exemplified.

As the release liner, a release liner in which a polyethylene terephthalate film is used as a support, and a release layer (or a release treating agent layer) is formed on one side of the support is preferable from the points of punching processability, small deformation to tension when processing a pressure-sensitive adhesive label, and the like.

The thickness (an overall thickness) of the release liner is not particularly limited, but is generally from about 30 to 200 µm.

As the release liner, a release liner having a small amount of a silicone component that transfers (moves) to the pressure-sensitive adhesive layer surface, and a release liner that does not use a silicone series release agent as a release agent can suitably be used in order to prevent deficiencies such as contact hindrance based on a silicone component in a precision electronics device such as a hard disk drive. As the release liner that does not use a silicone series release agent as a release agent, release liners having a release treating agent layer by a release treating agent other than a silicone series release agent, such as a fluorine series release agent and a long chain alkyl series release agent, formed on a substrate surface; plastic films themselves having high releasability, such as a polyethylene film and an ethylene-α-olefin copolymer film; and the like are exemplified.

The thickness (an overall thickness) of the release liner is not particularly limited, but is generally from about 30 to 200 µm. Where the thickness of the release liner is less than 30 µm, processing such as half-cut is difficult, and on the other hand, where exceeding 200 µm, handling properties deteriorate.

The release liner protecting the conductive pressure-sensitive adhesive layer is peeled when using the HDD pressure-sensitive adhesive label.

Thus, the HDD pressure-sensitive adhesive label of the present invention may have other layers according to need so long as it has a substrate, an information display portion forming face, a conductive pressure-sensitive adhesive layer in which the surface is utilized as a pressure-sensitive adhesive face, and a conductive layer formed on the face at the substrate side in the conductive pressure-sensitive adhesive layer, and has the characteristic that an electric resistance value in a two-dimensional direction on the surface (a pressure-sensitive adhesive face) of the conductive pressure-sensitive adhesive layer, so far as the function and effect of the present invention are not impaired. As the other layer, in addition to the pressure-sensitive adhesive layer (a conductive pressure-sensitive adhesive layer and a non-conductive pressure-sensitive adhesive layer) that is not utilized as the pressure-sensitive adhesive face of the HDD pressure-sensitive adhesive label as described above, an undercoat layer formed on the substrate, an overcoat layer (or a topcoat layer) formed on the information display forming face; and the like are exemplified.

The HDD pressure-sensitive adhesive label can be produced by using one side of the substrate as the information display portion forming face, and laminating the conductive layer and the conductive pressure-sensitive adhesive layer on the face at the conductive pressure-sensitive layer forming face side of the substrate (that is, a face opposite the information display portion forming face) in this order. In the case of previously forming the information display portion on the information display portion forming face, the HDD pressure-sensitive adhesive label can be produced by forming the information display portion on the face at the information display portion forming face side of the substrate, and forming the conductive layer and the conductive pressure-sensitive adhesive layer on the face at the conductive pressure-sensitive adhesive layer forming face side of the substrate in this order. In the formation of the information display portion, various printing methods and the like can be employed as described before. Further, in the formation of the conductive layer, a lamination method (particularly, a dry lamination adhesion method) using an adhesive or a pressure-sensitive adhesive, a deposition method, a coating method and the like can be employed as described above. Further, in the formation of the conductive pressure-sensitive adhesive layer, a coating method, a transfer method and the like can be employed.

The HDD pressure-sensitive adhesive label of the present invention is used by adhering to a package outer surface of a hard disk drive. Thus, by adhering the HDD pressure-sensitive adhesive label to a package outer surface of a hard disk drive, various information display functions as a pressure-sensitive adhesive label and an antistatic function that suppresses or prevents charging of the hard disk drive itself can be imparted to the hard disk drive.

In particular, when the HDD pressure-sensitive adhesive label is used by adhering to a package outer surface of a hard disk drive containing at least a part of an outer surface of a driving motor portion of the hard disk drive and at least a part of an outer surface of a base (a housing main body) having the driving motor portion fitted thereto, even though frictional static electricity generates by motor rotation of the driving motor portion when driving the hard disk drive, the HDD pressure-sensitive adhesive label enables the frictional static electricity to effectively escape to the base, thereby effectively preventing head crush of the hard disk drive.

Thus, in the present invention, antistatic prevention of the hard disk drive can be conducted by the pressure-sensitive adhesive label used to the hard disk drive as being essential. In particular, even when frictional static electricity generates by motor rotation of the driving motor portion, prevention of head crush of the hard disk drive can be conducted.

### [Hard disk drive]

The hard disk drive of the present invention has the pressure-sensitive adhesive label adhered to a package outer surface of the hard disk drive. As the pressure-sensitive adhesive label, the above-described pressure-sensitive adhesive label for a hard disk drive (that is, the HDD pressure-sensitive adhesive label having a substrate wherein one side is an information display portion forming face, a conductive pressure-sensitive adhesive layer formed on other side of the substrate, wherein the surface is utilized as a pressure-sensitive adhesive face, and a conductive layer formed on a face at the substrate side in the conductive pressure-sensitive adhesive layer, and having the characteristic that an electric resistance value in a two-dimensional direction of the surface of the conductive pressure-sensitive adhesive layer is 5 Ω or less) is used. As the pressure-sensitive adhesive label for a hard disk drive, a pressure-sensitive adhesive label for a hard disk drive in the form that an information display portion is formed on an information display portion forming face (that is, the HDD pressure-sensitive adhesive label having a substrate, an information display portion formed on an information display forming face of the substrate, a conductive pressure-sensitive adhesive layer formed on other side of the substrate, wherein the surface is utilized as a pressure-sensitive adhesive face, and a conductive layer formed on a face at the substrate side in the conductive pressure-sensitive adhesive layer, and having the characteristic that an electric resistance value in a two-dimensional direction of the surface of the conductive pressure-sensitive adhesive layer is 5 Ω or less) is generally used. Thus, it is preferable in the pressure-sensitive adhesive label for a hard disk drive that the information display portion is formed on the information display portion forming face when the label is adhered to a package outer surface of the hard disk drive. However, it is possible to form the information display portion on the information display portion forming face after the pressure-sensitive adhesive label for a hard disk drive is adhered to the package outer surface of the hard disk drive.

The hard disk drive is sufficient as long as the HDD pressure-sensitive adhesive label is adhered to at least a part of an outer surface of a package (that is, a package having incorporated therein a recording disk, a magnetic head, a driving motor and the like) of a hard disk drive. However, it is preferable that, on an outer surface of a package having incorporated therein a recording disk, a magnetic head, a driving motor and the like, the HDD pressure-sensitive adhesive label is adhered to a portion including at least a portion in the vicinity of the base side on an outer surface of the driving motor portion, and at least a portion in the vicinity of the driving motor portion side on an outer surface of the base having the driving motor portion fitted thereto, as shown in Fig. 3.

Fig. 3 is a schematic view showing one example of the hard disk drive of the present invention. In Fig. 3, 11 is the HDD pressure-sensitive adhesive label, 12 is the package of the hard disk drive, 12a is the base, and 12b is the driving motor portion. In the hard disk drive shown in Fig. 3, the package 12 of the hard disk drive has the embodiment that the driving motor portion 12b is fitted and fixed to the base 12a, and an outer surface at other side of the package 12 is constituted of an outer surface of the driving motor portion 12b and an outer surface of the base 12a. The HDD pressure-sensitive adhesive label 11 has a shape (nearly circular shape) larger than a shape (nearly circular shape) of the outer surface of the driving motor portion 12b, and is adhered to a portion including the entire outer surface of the driving motor portion 12b and an outer surface in the vicinity of the driving motor portion 12b on the outer surface of the base 12a. Therefore, the outer surface of the driving motor portion 12b and the outer surface of the base 12a are in a state being bridged by the HDD pressure-sensitive adhesive label 11, and is in a state that electric current can pass from the outer surface of the driving motor portion 12b to the outer surface of the base 12b by virtue of the conductive pressure-sensitive adhesive layer directly contacted to the outer surface of the driving motor portion 12b and the outer surface of the motor portion 12a, and the conductive layer directly contacted and formed on the face at the substrate side of the conductive pressure-sensitive adhesive layer. Due to this, even when frictional static electricity generates in the driving motor portion 12b by motor rotation of the driving motor portion 12, the frictional static electricity can transmit to the base 12a via the HDD pressure-sensitive adhesive label 11.

According to the pressure-sensitive adhesive label for a hard disk drive of the present invention, because of having the above-described constitution, it is possible to exhibit an information display function and to further effectively prevent charging of the hard disk drive, by adhering to a package outer surface of the hard disk drive. This enables cost reduction of a hard disk drive to establish.

The present invention is described in more specifically by reference to the Examples, but the invention is not construed as being limited to only the

### Examples.

### PRODUCTION EXAMPLE 1 OF PRESSURE-SENSITIVE ADHESIVE

Acrylic acid: 2 parts by weight, butyl acrylate: 100 parts by weight, and toluene as a polymerization solvent: 200 parts by weight were introduced into a three-necked flask, and stirred for 2 hours while introducing nitrogen gas. After thus removing oxygen in a polymerization system, benzoyl peroxide: 0.1 part by weight was added, temperature was elevated to 80°C, and polymerization reaction was conducted for 6 hours, thereby obtaining a reaction liquid containing an acrylic polymer. Weight average molecular weight of the acrylic polymer was 1,200,000.

To the reaction liquid containing the acrylic polymer, a nickel series conductive filler (nickel particles; average particle diameter: 3 µm) as a conductive filler was added in a proportion of 35 parts by weight per solid content of the acrylic polymer: 100 parts by weight, followed by sufficiently stirring. Thereafter, an isocyanate series crosslinking agent (trade name "Coronate L", a product of Nippon Polyurethane Industry Co., Ltd.) as a crosslinking agent was blended in a proportion of 2 parts by weight per solid content of the acrylic polymer: 100 parts by weight, followed by sufficiently stirring. Thus, an acrylic pressure-sensitive adhesive having conductivity (sometimes referred to as "conductive pressure-sensitive adhesive A") was prepared.

### PRODUCTION EXAMPLE 2 OF PRESSURE-SENSITIVE ADHESIVE

An acrylic pressure-sensitive adhesive having conductivity (sometimes referred to as "conductive pressure-sensitive adhesive B") was prepared in the same manner as in Production Example 1 of Pressure-Sensitive Adhesive, except that as a conductive filler, a carbon series conductive filler (a carbon filler, trade name "#376M", a product of Mikuni Color Co., Ltd.) was used in a proportion of 30 parts by weight per solid content of the acrylic polymer: 100 parts by weight, in place of the nickel series conductive filler.

### PRODUCTION EXAMPLE 3 OF PRESSURE-SENSITIVE ADHESIVE

To a carbon-containing pressure-sensitive adhesive (trade name "535D", a product of Soken Chemical & Engineering Co., Ltd.), a nickel series conductive filler (nickel particles; average particle diameter: 3 µm) as a conductive filler was added in a proportion of 15 parts by weight per solid content of the pressure-sensitive adhesive: 100 parts by weight, followed by sufficiently stirring. Thus, an acrylic pressure-sensitive adhesive having conductivity (sometimes referred to as "conductive pressure-sensitive adhesive C") was prepared.

### PRODUCTION EXAMPLE 4 OF PRESSURE-SENSITIVE ADHESIVE

Acrylic acid: 7 parts by weight, butyl acrylate: 100 parts by weight, and toluene as a polymerization solvent: 200 parts by weight were introduced into a three-necked flask, and stirred for 2 hours while introducing nitrogen gas. After thus removing oxygen in a polymerization system, benzoyl peroxide: 0.1 part by weight was added, temperature was elevated to 80°C, and polymerization reaction was conducted for 6 hours, thereby obtaining a reaction liquid containing an acrylic polymer. Weight average molecular weight of the acrylic polymer was 1,200,000.

To the reaction liquid containing the acrylic polymer, an isocyanate series crosslinking agent (trade name "Coronate L", a product of Nippon Polyurethane Industry Co., Ltd.) as a crosslinking agent was blended in a proportion of 2 parts by weight per solid content of the acrylic polymer: 100 parts by weight, followed by sufficiently stirring. Thus, an acrylic pressure-sensitive adhesive having conductivity (sometimes referred to as "conductive pressure-sensitive adhesive D") was prepared.

### EXAMPLE 1

An aluminum foil (thickness: 7 µm; a product of Sumikei Aluminum Foil Co., Ltd.) was laminated on one side of a while polyethylene terephthalate film (thickness: 25 µm) as a substrate for a pressure-sensitive adhesive label by a dry lamination bonding method to form a conductive layer. Thereafter, the conductive pressure-sensitive adhesive A obtained in (Production Example 1 of Pressure-Sensitive Adhesive) was applied to the conductive layer, and dried and cured to form a conductive pressure-sensitive adhesive layer (thickness: 25 µm). Further, using "MFR 38", trade name (a product of Mitsubishi Chemical Corporation; sometimes referred to as "release liner A") as a release liner, the release liner A was adhered to the conductive pressure-sensitive adhesive layer in a state that a release treating agent layer by a silicone series release treating agent in the release liner A contacts with the conductive pressure-sensitive adhesive layer, to produce a pressure-sensitive adhesive label.

### EXAMPLE 2

An aluminum deposited film (thickness: 50 nm) was formed on one side of a while polyethylene terephthalate film (thickness: 25 µm) as a substrate for a pressure-sensitive adhesive label by a metal deposition method to form a conductive layer. Thereafter, the conductive pressure-sensitive adhesive A obtained in (Production Example 1 of Pressure-Sensitive Adhesive) was applied to the conductive layer, and dried and cured to form a conductive pressure-sensitive adhesive layer (thickness: 25 µm). Further, using a release liner having a constitution that a low density polyethylene was laminated on one side of a polyethylene terephthalate film (thickness: 50 µm) by an extrusion lamination method (release liner: low density polyethylene layer, support: polyethylene terephthalate film; sometimes referred to as "release liner B") as a release liner, the release liner B was adhered to the conductive pressure-sensitive adhesive layer in a state that a release layer in the release liner B contacts with the conductive pressure-sensitive adhesive layer, to produce a pressure-sensitive adhesive label.

### EXAMPLE 3

A pressure-sensitive adhesive label was produced in the same manner as in Example 1, except for using the conductive pressure-sensitive adhesive B obtained in (Production Example 2 of Pressure-Sensitive Adhesive) as the conductive pressure-sensitive adhesive in place of the conductive pressure-sensitive adhesive A.

### EXAMPLE 4

A pressure-sensitive adhesive label was produced in the same manner as in Example 1, except for using the conductive pressure-sensitive adhesive C obtained in (Production Example 3 of Pressure-Sensitive Adhesive) as the conductive pressure-sensitive adhesive in place of the conductive pressure-sensitive adhesive A.

### COMPARATIVE EXAMPLE 1

The conductive pressure-sensitive adhesive A obtained in (Production Example 1 of Pressure-Sensitive Adhesive) was applied to one side of a while polyethylene terephthalate film (thickness: 25 µm) as a substrate for a pressure-sensitive adhesive label, and dried and cured to form a conductive pressure-sensitive adhesive layer (thickness: 25 µm). Further, using the release liner A (trade name "MFR 38", a product of Mitsubishi Chemical Corporation) as a release liner, the release liner A was adhered to the conductive pressure-sensitive adhesive layer in a state that a release treating agent layer by a silicone series release treating agent in the release liner A contacts with the conductive pressure-sensitive adhesive layer, to produce a pressure-sensitive adhesive label.

### COMPARATIVE EXAMPLE 2

An aluminum foil (thickness: 7 µm; a product of Sumikei Aluminum Foil Co., Ltd.) was laminated on one side of a while polyethylene terephthalate film (thickness: 25 µm) as a substrate for a pressure-sensitive adhesive label by a dry lamination bonding method to form a conductive layer. Thereafter, the conductive pressure-sensitive adhesive D obtained in (Production Example 4 of Pressure-Sensitive Adhesive) was applied to the conductive layer, and dried and cured to form a pressure-sensitive adhesive layer (thickness: 25 µm; non-conductive pressure-sensitive adhesive layer). Further, using the release liner A (trade name "MFR 38", a product of Mitsubishi Chemical Corporation) as a release liner, the release liner A was adhered to the conductive pressure-sensitive adhesive layer in a state that a release treating agent layer by a silicone series release treating agent in the release liner A contacts with the pressure-sensitive adhesive layer, to produce a pressure-sensitive adhesive label.

### (Evaluation of conductivity in two-dimensional direction on pressure-sensitive adhesive face)

On the pressure-sensitive adhesive labels according to Examples 1 to 4 and Comparative Examples 1 to 2, an electrical resistance value in a two-dimensional direction on the pressure-sensitive adhesive face was measured by the following (Measurement method of electrical resistance value in two-dimensional direction on pressure-sensitive adhesive face), and conductivity in a two-dimensional direction on the pressure-sensitive adhesive face of the pressure-sensitive adhesive label was evaluated. Electric resistance values measured are shown in Table 2. (Measurement method of electrical resistance value in two-dimensional direction on pressure-sensitive adhesive face)

A pressure-sensitive adhesive label is cut into width: 30 mm and length: 50 mm. The cut piece is adhered to two aluminum plates (width: 40 mm, length: 35 mm and thickness: 2.5 mm) in the form shown in Fig. 2 under the atmosphere of 25°C and 65%RH. In adhering, a force of 5 kg or more is applied using a hand roller to sufficiently perform contact bonding. After the contact bonding, a tip of each probe of an electric resistance measurement device (instrument: HIOKI m-ohm HiTESTER 3540, a product of Hioki E.E. Corporation) is fitted to each aluminum plate as shown in Fig. 2, and an electric resistance value (Ω) after 10 seconds is read off.

**Table 2**

| | Example | | | | Comparative Example | |
|---|---|---|---|---|---|---|
| | 1 | 2 | 3 | 4 | 1 | 2 |
| Electric resistance value (Ω) | 0.1 | 3 | 5 | 0.1 | Measurement impossible (30 kΩ or higher) | |

As is apparent from Table 2, the pressure-sensitive adhesive labels according to Examples 1 to 4 have the electric resistance value in a two-dimensional direction on the pressure-sensitive adhesive face of 5 Ω or less, and it was confirmed that the conductivity in a two-dimensional direction on the pressure-sensitive adhesive face is excellent.

On the other hand, the pressure-sensitive adhesive labels according to Comparative Examples 1 to 2 are that the electric resistance value in a two-dimensional direction on the pressure-sensitive adhesive face is impossible to measure (30 kΩ or higher), and the conductivity in a two-dimensional direction on the pressure-sensitive adhesive face is extremely low.

While the invention has been described in detail and with reference to specific embodiments thereof, it will be apparent to one skilled in the art that various changes and modifications can be made therein without departing from the spirit and scope thereof.

## Claims

1. A pressure-sensitive adhesive label for a hard disk drive, which is a pressure-sensitive adhesive label for adhering to a package outer surface of a hard disk drive, having a substrate, an information display portion forming face formed on one side of the substrate and a pressure-sensitive adhesive layer formed on other side of the substrate, and is **characterized in that** as the pressure-sensitive adhesive layer, the surface has a conductive pressure-sensitive adhesive layer utilized as a pressure-sensitive adhesive face, a conductive layer is formed on a face at the substrate side in the conductive pressure-sensitive adhesive layer, and an electric resistance value in a two-dimensional direction on the surface of the conductive pressure-sensitive adhesive layer is 5 Ω or less.

2. The pressure-sensitive adhesive label for a hard disk drive as claimed in claim 1, wherein the conductive layer is a metal foil layer or a metal deposition layer.

3. The pressure-sensitive adhesive label for a hard disk drive as claimed in claim 1 or 2, wherein the conductive pressure-sensitive adhesive layer is formed by a pressure-sensitive adhesive composition containing a metal filler.

4. The pressure-sensitive adhesive label for a hard disk drive as claimed in any one of claims 1 to 3, wherein the substrate is formed by a polyester film.

5. The pressure-sensitive adhesive label for a hard disk drive as claimed in any one of claims 1 to 4, wherein the substrate shows a white color.

6. The pressure-sensitive adhesive label for a hard disk drive as claimed in any one of claims 1 to 5, wherein the conductive pressure-sensitive adhesive layer is protected by a release liner that does not use a silicone series release agent.

7. The pressure-sensitive adhesive label for a hard disk drive as claimed in any one of claims 1 to 6, which is a pressure-sensitive adhesive label for adhering to an package outer surface of a hard disk drive containing at least a part of an outer surface of a driving motor portion and at least a part of an outer surface of a base having the driving motor portion fitted thereto.

8. A hard disk drive which is a hard disk drive having a pressure-sensitive adhesive label adhered to a package outer surface thereof, and is **characterized in that** the pressure-sensitive adhesive label for a hard disk drive as claimed in any one of claims 1 to 7 is used as the pressure-sensitive adhesive label.

9. The hard disk drive as claimed in claim 8, wherein the pressure-sensitive adhesive label for a hard disk drive is adhered to an package outer surface of a hard disk drive containing at least a part of an outer surface of a driving motor portion and at least a part of an outer surface of a base having the driving motor portion fitted thereto.
